# EUROPEAN PATENT SPECIFICATION

(11) **EP 2 849 561 B1**
(45) Date of publication and mention of the grant of the patent: **21.12.2016**
(21) Application number: 13723900.0
(22) Date of filing: 15.05.2013
(51) Int. Cl.: A01K 91/047, A01K 91/053, A01K 91/06, A01K 97/18

(54) **FISHING APPARATUS**
ANGELVORRICHTUNG
APPAREIL DE PÊCHE

(30) Priority: 17.05.2012 GB 201208665
(43) Date of publication of application: 25.03.2015
(73) Proprietor: Curd, Jonny, Roehampton, London SW14 4PG (GB); Wimbledon, Craig, Morden, Surrey SM4 6HW (GB)
(72) Inventor: Curd, Jonny, Roehampton, London SW14 4PG (GB); Wimbledon, Craig, Morden, Surrey SM4 6HW (GB)
(74) Representative: Ratcliffe, Susan Margaret
(86) International application number: PCT/GB2013/000220
(87) International publication number: WO 2013/171443

(56) References cited:
- US-A- 2 577 143
- US-A- 4 642 933
- US-A1- 2008 040 966
- US-B1- 6 176 036

## Description

### Field of the Invention

The present invention relates to fishing apparatus and in particular but not exclusively to fishing apparatus having a plurality of hooks to allow for catching of a plurality of fish.

### Background of the Invention

Fishing is one of the major sports in the UK and much of this activity entails the use of a hook and line. Most game fish spend a significant portion of their lives feeding near the bottom of a body of water such as lakes and rivers and so it is necessary to use a hook and bait to catch the fish. Depending on the type of fish to be caught the fishermen put bait at varying depths in the water. For fly fishing, the bait lies towards the surface of the water to attract fish that may mistake the bait for insects on the water surface. However, for bottom feeding fish, fisherman put their bait near the bottom of the water since the likelihood of catching fish is greatly increased as game fish tend to feed in rocky or obstructed areas that afford numerous hiding places for prey for the fish. However if a person is fishing in areas with many obstructions such as rocks there is a greater risk of snagging tackle. Fishermen loose time dealing with snags on obstructions and they try to free their lures without breaking their fishing line. The effort made is usually proportional to the value of the lure at risk of loss, with expensive lures meriting considerable expenditure of time and manpower. Also in competitions having to retrieve fishing apparatus such as lures is not desirable as the time spent may mean that time is diverted from fishing. Some fishermen have proposed "snag-free" rigs but these rigs have included complex arrangements of fishhooks, floats, and sinkers, some of which are detachable when placed under great strain as when snagged.

To avoid issues with hooks being out of action when they are snagged, fishing rigs have been developed which have multiple hooks. US 2577143 describes a fishing tackle with a hook spreader to keep hooks at a set distance from one another. US 2009/0077860 discusses the use of two hooks where a spreader has a pair of outstretched arms, each of which has an outer end with an aperture and there are two flexible attachments that are secured to the rig and which have flexible leaders with outside ends extending respectively through the apertures. A fishhook is fastened to the outside end of each one of the flexible leaders.

CA 1276787 again describes a fishing rig for live or artificial bait that has a bendable member mounted between at least two hooks, mounted with respect to a leader such that when one hook is set in a fish, the bendable member bends upon a pull of the leader and the other hook moves toward the set hook but the hooks are secured at fixed locations on the bendable member.

However the use of two hooks on one line is generally banned in most fishing clubs in the UK. This is because having two hooks attached to one line is deemed to be unsafe. It is unsafe because if one of the hooks attached to the fishing rig is taken by a fish, the hook could damage a fish on the other line, or if there is a free hook a fisherman could be injured when removing fish from a line if there is a free hook. Further a free hook could snag on the bottom of a waster course or other features in the water which increases the risk of losing tackle.

An object of the invention is to provide a fishing rig of uncomplicated construction and reasonable cost that will allow for a pair of baited fishhooks to be positioned above a rocky water bottom thereby effectively preventing snag to be discussed. Furthermore, the present invention seeks to overcome the problems of the prior art by providing fishing apparatus that can allow for multiple lines while keeping the device safe by allowing for a "loose" hook to be retracted into a safe area of the fishing apparatus. In addition the fishing apparatus is inexpensive to manufacture, and dependable in use.

### Summary of the Invention

According to a first aspect of the invention there is provided fishing apparatus as shown in claim 1. The fishing apparatus has a body with at least one bore with a fishing line running through said at least one bore, the fishing line having a first length to which a first hook is attached towards an end of said first length and a second length to which a second hook is attached towards an end of said second length, characterised in that the first and second lengths extend from the body at first and second locations and said first and second locations are in proximity to first and second receiving members such that if a force is applied to the first hook, the second hook is drawn into the second receiving member and if a force is applied to the second hook the first hook is drawn into the first receiving member.

Preferably the body is an elongate tube. The tube typically could be made of a relatively solid material such as a metal e.g. brass which will provide a degree of weight to enable the body to sink.

It is envisaged that the tube has flared ends which provide the first and second receiving members.

Preferably the receiving members are integral with the tube but they may also be a separate member that can be releasably attached to the body.

Preferably the receiving members are inserts that can be push fitted into first and second locations of the body.

In a preferred arrangement each receiving member includes a foam insert into which a hook can become embedded when it is drawn through the body.

It is envisaged that the body has anchor points to which a main fishing line can be attached to the body of the fishing apparatus.

Preferably the body has securing members to which a feeder or weight can be releasably secured.

It is envisaged that the body has attachment means to enable one body to be releasably secured to another body.

It is further envisaged that the body has a plurality of bores each with a line having a hook secured to either end of said line.

### Brief Description of the Figures

An embodiment of the invention will be described with reference to and as illustrated in the accompanying figures by way of example only, in which:
**Figure 1** **shows:** a side view of fishing apparatus according to an embodiment of the invention;
**Figure 2** **shows:** a perspective view of an end of a fishing apparatus as shown in Figure 1;
**Figure 3** **shows:** fishing apparatus as shown in Figure 1 with feeding attachments;
**Figure 4** **shows:** a fishing apparatus with a central attachment to a line;
**Figure 5** **shows:** a plan view of a fishing apparatus that can be opened up to receive a fishing line; and
**Figure 6** **shows:** a closer view of the ends of a fishing apparatus as shown in Figure 5.

### Detailed Description of Embodiments of the Invention

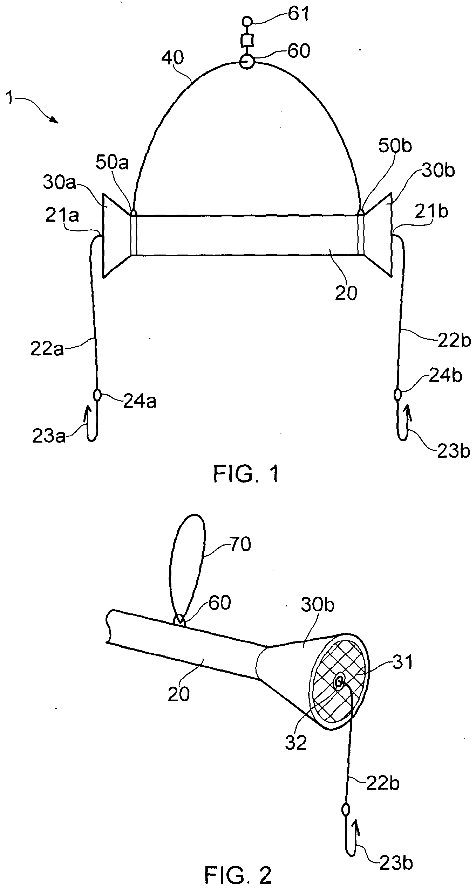

A fishing apparatus is shown generally as 1 in **Figure 1****.** The fishing apparatus includes a body 20 and at respective ends of the body there are openings at the end of the body 21a and 21b. From each of the openings there extends along a length of line 22a and 22b. The lengths may be individual lengths of line that are joined together with the join being within the body or they may be the ends of a single line that passes through the body. The body may include an insert (shown in Figure 2) that supports the line and allows it to run freely in the body. The support can also act as a baffle to prevent noise and/or vibration that could occur as the line runs through the body 20.

There are first and second hooks 23a and 23b attached by connectors 24a and 24b to the lengths 22a and 22b. The connectors are attached such that beyond a certain strain they will break so that not all of the fishing apparatus is lost.

At either end of the body 20 there are receiving members 30a and 30b which are shown as being conical in the figures but they may be any shape which is large enough to receive a hook 23a or 23b. It is preferred however that the outer diameter of the receiving member is larger than the diameter of the body so providing a flared shape. Although ends having a flared shape are shown the ends may be of any shape that can receive a hook.

There is a further length of line 40 each end of which is attached to the body 20 by connectors 50a and 50b which are in proximity to receiving members 30a and 30b. The further length of line in turn is attached to a swivel loop 60 which if formed of a larger eye connected to a smaller eye 61. The smaller eye 61 is how the fishing apparatus can be attached to a main fishing line (not shown). The line 40 may be of a dimension that when a strain is exerted on it beyond a certain point the line 40 snaps so that the line on the rod itself is not lost. The lines 22a and 22b are of a lesser breaking strain than line 40 and the main fishing line that is attached to eye 61 so that if there is a strain put on the fishing apparatus lines 22a and 22b break first so acting as a sacrificial part of the apparatus which avoids all of the tackle being lost.

Figure 2 shows a perspective view of a fishing apparatus with body 20 and receiving member 30b. The receiving member has an insert 31 which typically is a foam body that is push fitted in the receiving member. The insert has an aperture 32 through with line 22b extends. If the line is pulled from the other end the hook 23b that is on the end of the line is pulled towards the insert 31 and embeds itself in the foam insert and is retained there. This means that the hook and in particular the barbed end of the hook will not damage any fish that are hooked on the line by way of the other hook 23a and also if a fisherman draws in the line and starts to remove a hooked fish, he or she is at less risk of hurting themselves on a second hook because it is retained in the receiving member rather than being exposed.

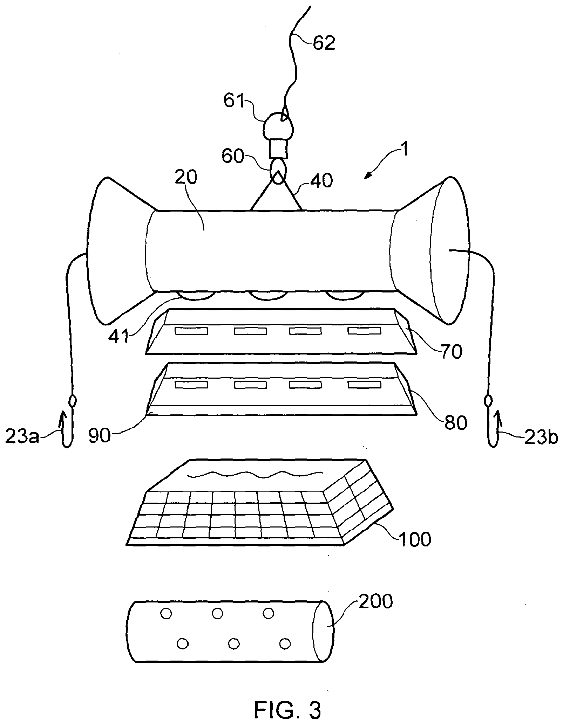

As shown in **Figure 3****,** the fishing apparatus 1 can have various attachments releasably secured to it. In particular it can be attached to a weight 70 which assists the body 20 in sinking to a required depth or to the bottom of a volume of water. The weight 70 may be a single weight or a plurality of weights that can be releasably secured to the body 20. In addition to or instead of a weight, a feeding device 80, 100 or 200 can be attached to the body. This may be in the form of a closed end feeder 80 which may have a weight 90 attached to the feeder. Alternatively a cage feeder 100 may be secured to the body or an open ended feeder 200 which typically is an elongate body having a series of apertures which expose feed to fish visiting the feeder. The feeder is positioned between the two ends of the body so that fish will be attracted roughly equally to the vicinity of the hooks 23a and 23b at each end of the body 20. The various attachments such as feeders can be secured to the main body by releasable clips to allow for ease of release and replacement.

As shown in Figure 3, the line 40 may be positioned so it is secured along the whole length of the body 20, rather than just towards the two ends of the body as shown in previous figures; this allows for some of the line 41 to be exposed along the length of the feeder and as there is some line free this provides an attachment for the feeder to be secured to the body at any one or more of a number of locations along the body 20.

Although the figures show an elongate body 20, the body may be of other shapes such as rounded, square or of an irregular shape so it can resemble a rock or plant life that would be found in bodies of water such as a river, lake or pond. However whatever the shape there will be openings and receiving members such that if one hook is pulled by a baited fish, the other hook can be pulled within part of the body 20 so that the fish is not injured or damaged by the other hook. Furthermore although two hooks have been described it is possible to have a plurality of a pair of hooks either within a single body or there may be a number of bodies having two hooks that arc secured together. However the ideal is two hooks so that any fish that is caught is not damaged by a hook as once a fish is caught, any exposed hooks are pulled into the body to avoid damaging the fish.

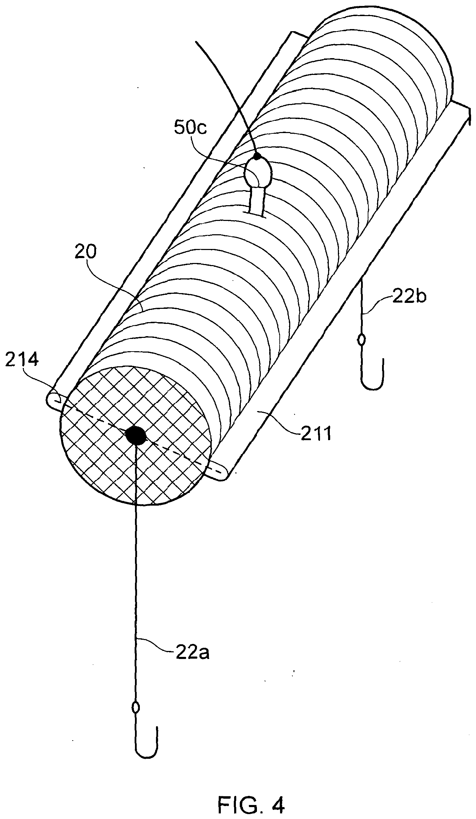

**Figure 4** shows an alternative way of securing the body 20 to a line. Rather than having the connectors at toward the end of the body as shown in Figure 1, there is a single connector 50c which located in a central region of the body. The single connector makes it easy to attach and release a line. As shown the body 20 in this case is made of two parts which are hinged together by hinge 214 and which can be secured by a catch 211. This means that to secure the fish line having ends 22a and 22b in the body 20, the body is opened up and the line is placed between the two parts of the body and closed shut using the catch 211 and this holds the line in position.

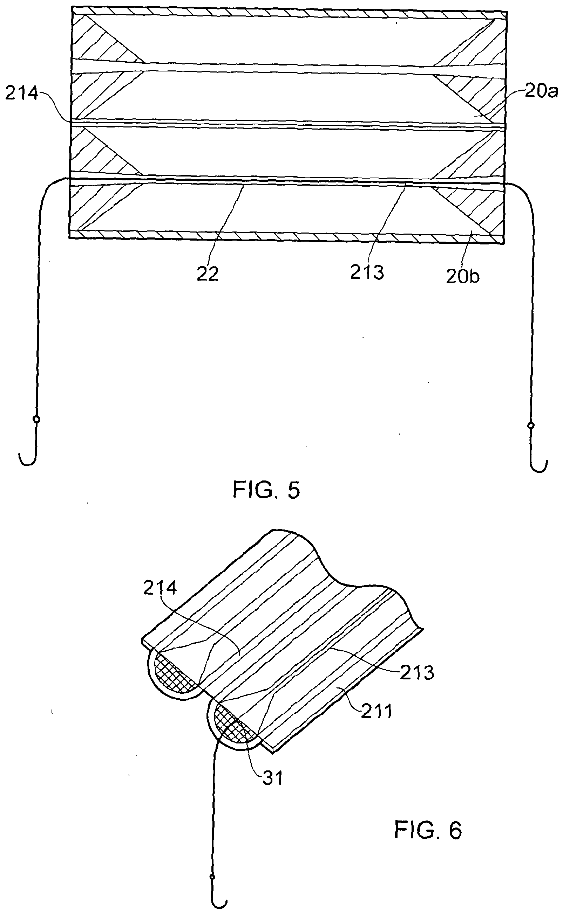

The opened up body is more apparent from **Figure 5****.** The body is formed of two parts 20a and 20b and at least one part has a channel 213. Preferably both parts 20a and 20b of the body have half channels which when the body is closed meet and inclose the fishing wire. The two parts are hinged together by hinge 214.

As shown in **Figure 6****,** the fishing wire passes along channel 213 and extends out of the end of the body where there are inserts 31 that are positioned in the receiving member at the end of the body and which holds the line at the end of the body. The body is closed by folding the two halves of the body towards each other by way of hinge member 214 and the two parts are held together using catch 211.

From the foregoing description, it should be appreciated that fishing apparatus according to the invention offers benefits to those fishing from locations such as a shoreline, pier, bridge or boat. With the protection against snags and damage to the fish that are afforded by the fishing apparatus of the present invention, the damage to fish and the risk of the loss of tackle and time is minimized and the opportunities to catch fish are maximized. Further the device can be made from biodegradable material so that if any tackle is lost, it will pollute the environment.

It should be noted that the above mentioned embodiments illustrate rather than limit the invention and that alteration or modifications are possible without departing from the scope of the invention as described and claimed. It is also to be noted that the invention covers not only individual embodiments but also combinations of any of the embodiments described.

## Claims

1. A fishing apparatus (1) having a body (20) with at least one bore with a fishing line running through said at least one bore, the fishing line having a first length (22a) to which a first hook (23a) is attached towards an end of said first length and a second length (22b) to which a second hook (23b) is attached towards an end of said second length, with the first and second lengths extending from the body at first and second locations **characterised in that** said first and second locations are in proximity to first and second receiving members (30a, 30b) such that if a force is applied to the first hook (23a), the second hook (23b) is drawn into the second receiving member (30b) and if a force is applied to the second hook (23b) the first hook (23a) is drawn into the first receiving member (30a).

2. A fishing apparatus according to claim 1, wherein the body (20) is an elongate tube.

3. A fishing apparatus according to claim 2, wherein the tube has flared ends which provide the first and second receiving members (30a, 30b).

4. A fishing apparatus according to any preceding claim, wherein the receiving members (30a, 30b) are integral with the body (20).

5. A fishing apparatus according to any of claims 1 to 3 wherein the receiving members (30a, 30b) are separate members that can be releasably attached to the body (20).

6. A fishing apparatus according to claim 5, wherein the receiving members (30a, 30b) are inserts that can be push fitted into first and second locations of the body.

7. A fishing apparatus according to any preceding claim wherein each receiving member (30a, 30b) includes a foam insert (31) into which a hook can become embedded when it is drawn through the body (20).

8. A fishing apparatus according to any preceding claim wherein the body (20) has anchor points to which a main fishing line can be attached to the body (20) of the fishing apparatus.

9. A fishing apparatus according to any preceding claim wherein the body (20) has securing members to which a feeder (80) or weight (70) can be releasably secured.

10. A fishing apparatus according to any preceding claim wherein the body (20) has attachment means to enable one body to be releasably secured to another body.

11. A fishing apparatus according to any preceding claim wherein the body (20) has a plurality of bores each with a line having a hook secured to either end of said line.

12. A fishing apparatus according to any preceding claim wherein the body (20) of the fishing apparatus is formed of two parts (20a, 20b) hinged together wherein said two parts can be brought towards one another thereby inclosing at least part of a fishing line positioned between said two parts with the first and second lengths of the fishing line extending from ends of the body (20).

13. A fishing apparatus according to claim 12, wherein the two parts (20a, 20b) when closed are secured to one another by a releasably catch (211) that can be opened to retrieve or introduce fishing line into the body.

14. A fishing apparatus (1) according to any preceding claim which is made from biodegradable material

15. A fishing tackle including a rod and main line attaching to a fishing apparatus (1) according to any preceding claim.

## Patentansprüche

1. Angelvorrichtung (1) mit einem Körper (20) mit mindestens einer Bohrung, wobei eine Angelschnur durch die mindestens eine Bohrung läuft, wobei die Angelschnur eine erste Länge (22a), an der zu einem Ende der ersten Länge hin ein erster Angelhaken (23a) angebracht ist, und eine zweite Länge (22b) hat, an der zu einem Ende der zweiten Länge hin ein zweiter Angelhaken (23b) angebracht ist, wobei sich die erste und die zweite Länge an einer ersten und einer zweiten Stelle vom Körper erstrecken, **dadurch gekennzeichnet, dass** die erste und die zweite Stelle in der Nähe eines ersten und eines zweiten Aufnahmeglieds (30a, 30b) sind, so dass der zweite Angelhaken (23b) in das zweite Aufnahmeglied (30b) gezogen wird, wenn der erste Angelhaken (23a) mit einer Kraft beaufschlagt wird, und der erste Angelhaken (23a) in das erste Aufnahmeglied (30a) gezogen wird, wenn der zweite Angelhaken (23b) mit einer Kraft beaufschlagt wird.

2. Angelvorrichtung nach Anspruch 1, wobei der Körper (20) eine längliche Röhre ist.

3. Angelvorrichtung nach Anspruch 2, wobei die Röhre aufgeweitete Enden hat, die das erste und das zweite Aufnahmeglied (30a, 30b) bereitstellen.

4. Angelvorrichtung nach einem der vorhergehenden Ansprüche, wobei die Aufnahmeglieder (30a, 30b) integral mit dem Körper (20) sind.

5. Angelvorrichtung nach einem der Ansprüche 1 bis 3, wobei die Aufnahmeglieder (30a, 30b) getrennte Glieder sind, die freigebbar am Körper (20) angebracht werden können.

6. Angelvorrichtung nach Anspruch 5, wobei die Aufnahmeglieder (30a, 30b) Einsätze sind, die in die erste und die zweite Stelle des Körpers eingeschoben werden können.

7. Angelvorrichtung nach einem der vorhergehenden Ansprüche, wobei jedes Aufnahmeglied (30a, 30b) einen Schaumstoffeinsatz (31) aufweist, in den sich ein Angelhaken einbetten kann, wenn er durch den Körper (20) gezogen wird.

8. Angelvorrichtung nach einem der vorhergehenden Ansprüche, wobei der Körper (20) Ankerpunkte hat, an denen eine Hauptangelschnur am Körper (20) der Angelvorrichtung angebracht werden kann.

9. Angelvorrichtung nach einem der vorhergehenden Ansprüche, wobei der Körper (20) Befestigungsglieder hat, an denen ein Zuführer (80) oder ein Gewicht (70) freigebbar befestigt werden kann.

10. Angelvorrichtung nach einem der vorhergehenden Ansprüche, wobei der Körper (20) Anbringmittel hat, so dass ein Körper freigebbar an einem anderen Körper befestigt werden kann.

11. Angelvorrichtung nach einem der vorhergehenden Ansprüche, wobei der Körper (20) eine Vielzahl von Bohrungen hat, die jeweils eine Schnur mit einem an jedem Ende der Schnur befestigten Angelhaken haben.

12. Angelvorrichtung nach einem der vorhergehenden Ansprüche, wobei der Körper (20) der Angelvorrichtung aus zwei aneinander angelenkten Teilen (20a, 20b) gebildet ist, wobei die beiden Teile aneinander angenähert werden können, wodurch mindestens ein Teil einer zwischen den beiden Teilen positionierten Angelschnur umschlossen wird, wobei sich die erste und die zweite Länge der Angelschnur von Enden des Körpers (20) erstrecken.

13. Angelvorrichtung nach Anspruch 12, wobei die beiden Teile (20a, 20b) im geschlossenen Zustand durch einen freigebbaren Schnapper (211), der zum Herausnehmen oder Einführen von Angelschnur in den Körper geöffnet werden kann, aneinander befestigt sind.

14. Angelvorrichtung (1) nach einem der vorhergehenden Ansprüche, die aus biologisch abbaubarem Material hergestellt ist.

15. Angelzeug, das eine Rute und eine Hauptschnur aufweist, die an einer Angelvorrichtung (1) nach einem der vorhergehenden Ansprüche angebracht werden können.

## Revendications

1. Appareil de pêche (1) comportant un corps (20) comprenant au moins un orifice avec une ligne de pêche passant à travers ledit ou lesdits orifices, la ligne de pêche comportant une première longueur (22a) à laquelle est attaché un premier hameçon (23a) vers une extrémité de ladite première longueur et une seconde longueur (22b) à laquelle est attaché un second hameçon (23b) vers une extrémité de ladite seconde longueur, les première et seconde longueurs s'étendant à partir du corps au niveau de premier et second emplacements, **caractérisé en ce que** lesdits premier et second emplacements se trouvent à proximité de premier et second éléments de réception (30a, 30b) de telle sorte que, si une force est appliquée au premier hameçon (23a), le second hameçon (23b) est tiré dans le second élément de réception (30b) et, si une force est appliquée au second hameçon (23b), le premier hameçon (23a) est tiré dans le premier élément de réception (30a).

2. Appareil de pêche selon la revendication 1, dans lequel le corps (20) est un tube allongé.

3. Appareil de pêche selon la revendication 2, dans lequel le tube comporte des extrémités évasées qui forment les premier et second éléments de réception (30a, 30b).

4. Appareil de pêche selon l'une quelconque des revendications précédentes, dans lequel les éléments de réception (30a, 30b) font partie intégrante du corps (20).

5. Appareil de pêche selon l'une quelconque des revendications 1 à 3, dans lequel les éléments de réception (30a, 30b) sont des éléments distincts qui peuvent être attachés, de manière libérable, au corps (20).

6. Appareil de pêche selon la revendication 5, dans lequel les éléments de réception (30a, 30b) sont des garnitures qui peuvent être ajustées par enfoncement dans les premier et second emplacements du corps.

7. Appareil de pêche selon l'une quelconque des revendications précédentes, dans lequel chaque élément de réception (30a, 30b) comprend une garniture en mousse (31) dans laquelle peut se loger un hameçon lorsqu'il est tiré à travers le corps (20).

8. Appareil de pêche selon l'une quelconque des revendications précédentes, dans lequel le corps (20) comporte des points d'ancrage au niveau desquels une ligne de pêche principale peut être attachée au corps (20) de l'appareil de pêche.

9. Appareil de pêche selon l'une quelconque des revendications précédentes, dans lequel le corps (20) comporte des éléments de fixation auxquels peuvent être fixés, de manière libérable, un feeder (80) ou un plomb (70).

10. Appareil de pêche selon l'une quelconque des revendications précédentes, dans lequel le corps (20) comporte des moyens d'attache afin de permettre la fixation d'un corps, de manière libérable, à un autre corps.

11. Appareil de pêche selon l'une quelconque des revendications précédentes, dans lequel le corps (20) comporte une pluralité d'orifices ayant chacun une ligne dotée d'un hameçon fixé à chaque extrémité de ladite ligne.

12. Appareil de pêche selon l'une quelconque des revendications précédentes, dans lequel le corps (20) de l'appareil de pêche est constitué de deux parties (20a, 20b) reliées l'une à l'autre par charnière, dans lequel lesdites deux parties peuvent être rapprochées l'une de l'autre de façon à entourer au moins une partie d'une ligne de pêche positionnée entre lesdites deux parties, les première et seconde longueurs de la ligne de pêche s'étendant à partir des extrémités du corps (20).

13. Appareil de pêche selon la revendication 12, dans lequel les deux parties (20a, 20b) sont, lorsqu'elles sont accolées, fixées l'une à l'autre par le biais d'un élément de blocage (211) libérable qui peut être ouvert pour extraire une ligne de pêche du corps ou introduire une ligne de pêche dans le corps.

14. Appareil de pêche (1) selon l'une quelconque des revendications précédentes qui est constitué d'un matériau biodégradable.

15. Matériel de pêche comprenant une canne et une ligne principale s'attachant à un appareil de pêche (1) selon l'une quelconque des revendications précédentes.
